# EUROPEAN PATENT SPECIFICATION

(11) **EP 0 670 841 B1**
(45) Date of publication and mention of the grant of the patent: **22.01.1997**
(21) Application number: 94901639.8
(22) Date of filing: 22.11.1993
(51) Int. Cl.: C07F 9/145, C08K 5/527, C07F 9/141

(54) **AMORPHOUS SOLID MODIFICATION OF 2,2',2''-NITRILO TRIETHYL-TRIS-(3,3',5,5'-TETRA-TERT-BUTYL-1,1'-BIPHENYL-2,2'-DIYL)PHOSPHITE]**
AMORPHE FESTE MODIFIKATION VON 2,2', 2"-NITRILO(TRIÄTHYL-TRIS-(3,3, 5,5'-TETRA-TERT-BUTYL-1,1'-BIPHENYL-2,2'-DIYL)PHOSPHIT
MODIFICATION SOLIDE AMORPHE DE 2,2',2''-NITRILO TRIETHYL-TRIS-(3,3',5,5'-TETRA-TERT-BUTYL-1,1'-BIPHENYL-2,2'-DIYL)PHOSPHITE]

(30) Priority: 30.11.1992 US 983186
(43) Date of publication of application: 13.09.1995
(73) Proprietor: Ciba SC Holding AG, 4057 Basel (CH)
(72) Inventor: PASTOR, Stephen, D., Danbury, CT 06810 (US); SHUM, Sai, P., Pleasantville, NY 10572 (US)
(86) International application number: PCT/US93/11326
(87) International publication number: WO 94/12506

(56) References cited:
- US-A- 2 841 607
- US-A- 4 318 845
- US-A- 4 374 219

## Description

This invention pertains to an amorphous solid modification of 2,2',2"-nitrilo[triethyl-tris-(3,3,,5,5'-tetra-tert-butyl-1,1'-biphenyl-2,2'-diyl) phosphite], to a process for preparing said modification and the use thereof for stabilizing organic materials against oxidative, thermal or light-induced degradation.

2,2',2"-Nitrilo[triethyl-tris-(3,3',5,5'-tetra-tert-butyl-1,1'-biphenyl-2,2'-diyl) phosphite] is a compound having the formula I

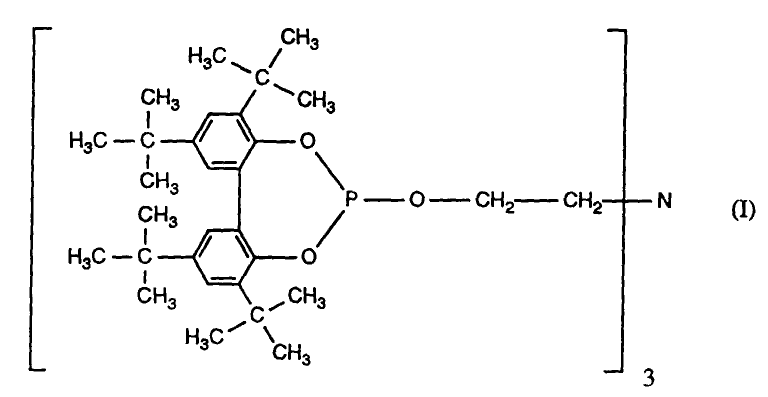

This compound of formula I is useful as a processing stabilizer for organic materials as taught in US-A-4 318 845 and US-A-4 374 219. The compound of formula I is disclosed as being a white powder melting at 121-134°C. The relatively high melting point of the "white powder" form of the compound of formula I as disclosed in the above mentioned patents is a problem when stabilizing organic polymers processed at relatively low temperatures such as blow molding of HDPE and processing of natural rubber. The result is the additive is not uniformly distributed within the organic polymer causing problems in the stabilization performance of the additive stabilizer.

In accordance with the present invention an amorphous form of the compound of formula I is obtained which does not suffer the problems associated with the higher melting powder reported previously. This new amorphous form is characterized by a glass transition temperature (T_{g}) within the range of from 105-110°C free of any endothermic melting peak above 110°C up to 230°C as determined by differential scanning calorimetry (DSC). Additionally the amorphous form of the present invention gave a featureless X-ray diffraction pattern obtained using Cu-Kα.

The instant invention also relates to a process for the preparation of this novel amorphous solid modification of the compound of formula I, which comprises melting said compound and rapidly cooling the melt

The preferred method consists of pouring the molten material onto a cool surface maintained below 100°C, more preferably near 25°C. The amorphous solid thus obtained may be further ground or granulated into any desired particle size by conventional means.

The instant invention relates also to the amorphous solid form of 2,2',2"-nitrilo[triethyl-tris-(3,3',5,5'-tetra-tert-butyl-1,1'-biphenyl-2,2'-diyl) phosphite], characterized by melting in the range of 105-110°C and by an X-ray diffraction pattern which is featureless, obtainable by melting said compound and rapidly cooling the melt

The amorphous solid according to the invention is highly suitable for stabilizing organic materials against oxidative, thermal or light-induced degradation.

Examples of such organic materials are:
1. Polymers of monoolefins and diolefins, for example polypropylene, polyisobutylene, polybut-1-ene, poly-4-methylpent-1-ene, polyisoprene or polybutadiene, as well as polymers of cycloolefins, for instance of cyclopentene or norbornene, polyethylene (which optionally can be crosslinked), for example high density polyethylene (HDPE), low density polyethylene (LDPE), linear low density polyethylene (LLDPE), branched low density polyethylene (BLDPE).
   Polyolefins, i.e. the polymers of monoolefins exemplified in the preceding paragraph, preferably polyethylene and polypropylene, can be prepared by different, and especially by the following, methods:
   a) radical polymerisation (normally under high pressure and at elevated temperature).
   b) catalytic polymerisation using a catalyst that normally contains one or more than one metal of groups IVb, Vb, VIb or VIII of the Periodic Table. These metals usually have one or more than one ligand, typically oxides, halides, alcoholates, esters, ethers, amines, alkyls, alkenyls and/or aryls that may be either π- or σ-coordinated. These metal complexes may be in the free form or fixed on substrates, typically on activated magnesium chloride, titanium(III) chloride, alumina or silicon oxide. These catalysts may be soluble or insoluble in the polymerisation medium. The catalysts can be used by themselves in the polymerisation or further activators may be used, typically metal alkyls, metal hydrides, metal alkyl halides, metal alkyl oxides or metal alkyloxanes, said metals being elements of groups Ia, IIa and/or IIIa of the Periodic Table. The activators may be modified conveniently with further ester, ether, amine or silyl ether groups. These catalyst systems are usually termed Phillips, Standard Oil Indiana, Ziegler (-Natta), TNZ (DuPont), metallocene or single site catalysts (SSC).
2. Mixtures of the polymers mentioned under 1), for example mixtures of polypropylene with polyisobutylene, polypropylene with polyethylene (for example PP/HDPE, PP/LDPE) and mixtures of different types of polyethylene (for example LDPE/HDPE).
3. Copolymers of monoolefins and diolefins with each other or with other vinyl monomers, for example ethylene/propylene copolymers, linear low density polyethylene (LLDPE) and mixtures thereof with low density polyethylene (LDPE), propylene/but-1-ene copolymers, propylene/isobutylene copolymers, ethylene/but-1-ene copolymers, ethylene/hexene copolymers, ethylene/methylpentene copolymers, ethylene/heptene copolymers, ethylene/octene copolymers, propylene/butadiene copolymers, isobutylene/-isoprene copolymers, ethylene/alkyl acrylate copolymers, ethylene/alkyl methacrylate copolymers, ethylene/vinyl acetate copolymers and their copolymers with carbon monoxide or ethylene/acrylic acid copolymers and their salts (ionomers) as well as terpolymers of ethylene with propylene and a diene such as hexadiene, dicyclopentadiene or ethylidene-norbornene; and mixtures of such copolymers with one another and with polymers mentioned in 1) above, for example polypropylene/ethylene-propylene copolymers, LDPE/ethylene-vinyl acetate copolymers (EVA), LDPE/ethylene-acrylic acid copolymers (EAA), LLDPE/EVA, LLDPE/EAA and alternating or random polyalkylene/carbon monoxide copolymers and mixtures thereof with other polymers, for example polyamides.
4. Hydrocarbon resins (for example C₅-C₉) including hydrogenated modifications thereof (e.g. tackifiers) and mixtures of polyalkylenes and starch.
5. Polystyrene, poly(p-methylstyrene), poly(α-methylstyrene).
6. Copolymers of styrene or α-methylstyrene with dienes or acrylic derivatives, for example styrene/butadiene, styrene/acrylonitrile, styrene/alkyl methacrylate, styrene/butadiene/alkyl acrylate, styrene/butadiene/alkyl methacrylate, styrene/maleic anhydride, styrene/acrylonitrile/methyl acrylate; mixtures of high impact strength of styrene copolymers and another polymer, for example a polyacrylate, a diene polymer or an ethylene/-propylene/diene terpolymer; and block copolymers of styrene such as styrene/butadiene/-styrene, styrene/isoprene/styrene, styrene/ethylene/butylene/styrene or styrene/ethylene/-propylene/ styrene.
7. Graft copolymers of styrene or α-methylstyrene, for example styrene on polybutadiene, styrene on polybutadiene-styrene or polybutadiene-acrylonitrile copolymers; styrene and acrylonitrile (or methacrylonitrile) on polybutadiene; styrene, acrylonitrile and methyl methacrylate on polybutadiene; styrene and maleic anhydride on polybutadiene; styrene, acrylonitrile and maleic anhydride or maleimide on polybutadiene; styrene and maleimide on polybutadiene; styrene and alkyl acrylates or methacrylates on polybutadiene; styrene and acrylonitrile on ethylene/propylene/diene terpolymers; styrene and acrylonitrile on polyalkyl acrylates or polyalkyl methacrylates, styrene and acrylonitrile on acrylate/butadiene copolymers, as well as mixtures thereof with the copolymers listed under 6), for example the copolymer mixtures known as ABS, MBS, ASA or AES polymers.
8. Halogen-containing polymers such as polychloroprene, chlorinated rubbers, chlorinated or sulfochlorinated polyethylene, copolymers of ethylene and chlorinated ethylene, epichlorohydrin homo- and copolymers, especially polymers of halogen-containing vinyl compounds, for example polyvinyl chloride, polyvinylidene chloride, polyvinyl fluoride, polyvinylidene fluoride, as well as copolymers thereof such as vinyl chloride/vinylidene chloride, vinyl chloride/vinyl acetate or vinylidene chloride/vinyl acetate copolymers.
9. Polymers derived from α,β-unsaturated acids and derivatives thereof such as polyacrylates and polymethacrylates; polymethyl methacrylates, polyacrylamides and polyacrylonitriles, impact-modified with butyl acrylate.
10. Copolymers of the monomers mentioned under 9) with each other or with other unsaturated monomers, for example acrylonitrile/ butadiene copolymers, acrylonitrile/-alkyl acrylate copolymers, acrylonitrile/alkoxyalkyl acrylate or acrylonitrile/vinyl halide copolymers or acrylonitrile/ alkyl methacrylate/butadiene terpolymers.
11. Polymers derived from unsaturated alcohols and amines or the acyl derivatives or acetals thereof, for example polyvinyl alcohol, polyvinyl acetate, polyvinyl stearate, polyvinyl benzoate, polyvinyl maleate, polyvinyl butyral, polyallyl phthalate or polyallyl melamine; as well as their copolymers with olefins mentioned in 1) above.
12. Homopolymers and copolymers of cyclic ethers such as polyalkylene glycols, polyethylene oxide, polypropylene oxide or copolymers thereof with bisglycidyl ethers.
13. Polyacetals such as polyoxymethylene and those polyoxymethylenes which contain ethylene oxide as a comonomer; polyacetals modified with thermoplastic polyurethanes, acrylates or MBS.
14. Polyphenylene oxides and sulfides, and mixtures of polyphenylene oxides with styrene polymers or polyamides.
15. Polyurethanes derived from hydroxyl-terminated polyethers, polyesters or polybutadienes on the one hand and aliphatic or aromatic polyisocyanates on the other, as well as precursors thereof.
16. Polyamides and copolyamides derived from diamines and dicarboxylic acids and/or from aminocarboxylic acids or the corresponding lactams, for example polyamide 4, polyamide 6, polyamide 6/6, 6/10, 6/9, 6/12, 4/6, 12/12, polyamide 11, polyamide 12, aromatic polyamides starting from m-xylene diamine and adipic acid; polyamides prepared from hexamethylenediamine and isophthalic or/and terephthalic acid and with or without an elastomer as modifier, for example poly-2,4,4,-trimethylhexamethylene terephthalamide or poly-m-phenylene isophthalamide; and also block copolymers of the aforementioned polyamides with polyolefins, olefin copolymers, ionomers or chemically bonded or grafted elastomers; or with polyethers, e.g. with polyethylene glycol, polypropylene glycol or polytetramethylene glycol; as well as polyamides or copolyamides modified with EPDM or ABS; and polyamides condensed during processing (RIM polyamide systems).
17. Polyureas, polyimides, polyamide-imides and polybenzimidazoles.
18. Polyesters derived from dicarboxylic acids and diols and/or from hydroxycarboxylic acids or the corresponding lactones, for example polyethylene terephthalate, polybutylene terephthalate, poly-1,4-dimethylolcyclohexane terephthalate and polyhydroxybenzoates, as well as block copolyether esters derived from hydroxyl-terminated polyethers; and also polyesters modified with polycarbonates or MBS.
19. Polycarbonates and polyester carbonates.
20. Polysulfones, polyether sulfones and polyether ketones.
21. Crosslinked polymers derived from aldehydes on the one hand and phenols, ureas and melamines on the other hand, such as phenol/formaldehyde resins, urea/formaldehyde resins and melamine/formaldehyde resins.
22. Drying and non-drying alkyd resins.
23. Unsaturated polyester resins derived from copolyesters of saturated and unsaturated dicarboxylic acids with polyhydric alcohols and vinyl compounds as crosslinking agents, and also halogen-containing modifications thereof of low flammability.
24. Crosslinkable acrylic resins derived from substituted acrylates, for example epoxy acrylates, urethane acrylates or polyester acrylates.
25. Alkyd resins, polyester resins and acrylate resins crosslinked with melamine resins, urea resins, polyisocyanates or epoxy resins.
26. Crosslinked epoxy resins derived from polyepoxides, for example from bisglycidyl ethers or from cycloaliphatic diepoxides.
27. Natural polymers such as cellulose, rubber, gelatin and chemically modified homologous derivatives thereof, for example cellulose acetates, cellulose propionates and cellulose butyrates, or the cellulose ethers such as methyl cellulose; as well as rosins and their derivatives.
28. Blends of the aforementioned polymers (polyblends), for example PP/EPDM, Polyamide/EPDM or ABS, PVC/EVA, PVC/ABS, PVC/MBS, PC/ABS, PBTP/ABS, PC/ASA, PC/PBT, PVC/CPE, PVC/acrylates, POM/thermoplastic PUR, PC/thermoplastic PUR, POM/acrylate, POM/MBS, PPO/HIPS, PPO/PA 6.6 and copolymers, PA/HDPE, PA/PP, PA/PPO.
29. Naturally occurring and synthetic organic materials which are pure monomeric compounds or mixtures of such compounds, for example mineral oils, animal and vegetable fats, oil and waxes, or oils, fats and waxes based on synthetic esters (e.g. phthalates, adipates, phosphates or trimellitates) and also mixtures of synthetic esters with mineral oils in any weight ratios, typically those used as spinning compositions, as well as aqueous emulsions of such materials.
30. Aqueous emulsions of natural or synthetic rubber, e.g. natural latex or latices of carboxylated styrene/butadiene copolymers.

Accordingly, the invention also relates to compositions comprising (a) an organic material subjected to oxidative, thermal or light-induced degradation and (b) the amorphous solid form of 2,2',2"-nitrilo[triethyl-tris-(3,3',5,5'-tetra-tert-butyl-1,1'-biphenyl-2,2'-diyl) phosphite].

Preferably, the organic materials to be protected are natural, semi-synthetic or, preferably, synthetic organic materials. Particular preference is given to thermoplastic polymers, in particular PVC or polyolefins, especially polyethylene and polypropylene.

The action of the compounds according to the invention against thermal and oxidative degradation, especially under thermal stress, such as occurs during processing of thermoplastics, may be mentioned in particular. Accordingly, the compounds according to the invention are highly suitable for use as processing stabilizers.

Preferably, the amorphous solid form of 2,2',2"-nitrilo[triethyl-tris-(3,3',5,5'-tetra-tert-butyl-1,1'-biphenyl-2,2'-diyl) phosphite] according to the invention is added to the material to be stabilized in amounts of 0.01 to 10%, for example 0.01 to 5%, preferably 0.05 to 3%, in particular 0.05 to 1%, relative to the weight of the organic material to be stabilized.

The compositions according to the invention can contain, in addition to the amorphous solid form of 2,2',2"-nitrilo[triethyl-tris-(3,3',5,5'-tetra-tert-butyl-1,1'-biphenyl-2,2'-diyl) phosphite], further co-stabilizers, for example the following:

### 1. Antioxidants

1.1. Alkylated monophenols, for example 2,6-di-tert-butyl-4-methylphenol, 2-tert-butyl-4,6-dimethylphenol, 2,6-di-tert-butyl-4-ethylphenol, 2,6-di-tert-butyl-4-n-butylphenol, 2,6-di-tert-butyl-4-isobutylphenol, 2,6-dicyclopentyl-4-methylphenol, 2-(α-methylcyclohexyl)-4,6-dimethylphenol, 2,6-dioctadecyl-4-methylphenol, 2,4,6-tricyclohexylphenol, 2,6-di-tert-butyl-4-methoxymethylphenol, 2,6-di-nonyl-4-methylphenol, 2,4-dimethyl-6-(1'-methylundec-1'-yl)phenol, 2,4-dimethyl-6-(1'-methylheptadec-1'-yl)phenol, 2,4-dimethyl-6-(1'-methyltridec-1'-yl)phenol and mixtures thereof.

1.2. Alkylthiomethylphenols, for example 2,4-dioctylthiomethyl-6-tert-butylphenol, 2,4-dioctylthiomethyl-6-methylphenol, 2,4-dioctylthiomethyl-6-ethylphenol, 2,6-di-dodecylthiomethyl-4-nonylphenol.

1.3. Hydroquinones and alkylated hydroquinones, for example 2,6-di-tert-butyl-4-methoxyphenol, 2,5-di-tert-butylhydroquinone,2,5-di-tert-amylhydroquinone, 2,6-diphenyl-4-octadecyloxyphenol, 2,6-di-tert-butylhydroquinone, 2,5-di-tert-butyl-4-hydroxyanisole, 3,5-di-tert-butyl-4-hydroxyanisole, 3,5-di-tert-butyl-4-hydroxyphenyl stearate, bis-(3,5-di-tert-butyl-4-hydroxyphenyl) adipate.

1.4. Hydroxylated thiodiphenyl ethers, for example 2,2'-thiobis(6-tert-butyl-4-methylphenol), 2,2'-thiobis(4-octylphenol), 4,4'-thiobis(6-tert-butyl-3-methylphenol), 4,4'-thiobis(6-tert-butyl-2-methylphenol), 4,4'-thiobis-(3,6-di-sec-amylphenol), 4,4'-bis-(2,6-dimethyl-4-hydroxyphenyl) disulfide.

1.5. Alkylidenebisphenols, for example 2,2'-methylenebis(6-tert-butyl-4-methylphenol), 2,2'-methylenebis(6-tert-butyl-4-ethylphenol), 2,2'-methylenebis[4-methyl-6-(α-methylcyclohexyl)phenol], 2,2'-methylenebis(4-methyl-6-cyclohexylphenol), 2,2'-methylenebis(6-nonyl-4-methylphenol), 2,2'-methylenebis(4,6-di-tert-butylphenol), 2,2'-ethylidenebis(4,6-di-tert-butylphenol), 2,2'-ethylidenebis(6-tert-butyl-4-isobutylphenol), 2,2'-methylenebis[6-(α-methylbenzyl)-4-nonylphenol], 2,2'-methylenebis[6-(α,α-dimethylbenzyl)-4-nonylphenol], 4,4'-methylenebis(2,6-di-tert-butylphenol), 4,4'-methylenebis(6-tert-butyl-2-methylphenol), 1,1-bis(5-tert-butyl-4-hydroxy-2-methylphenyl)butane, 2,6-bis(3-tert-butyl-5-methyl-2-hydroxybenzyl)-4-methylphenol, 1,1,3-tris(5-tert-butyl-4-hydroxy-2-methylphenyl)butane, 1,1-bis(5-tert-butyl-4-hydroxy-2-methyl-phenyl)-3-n-dodecylmercaptobutane, ethylene glycol bis[3,3-bis(3'-tert-butyl-4'-hydroxyphenyl)butyrate], bis(3-tert-butyl-4-hydroxy-5-methyl-phenyl)dicyclopentadiene, bis[2-(3'-tert-butyl-2'-hydroxy-5'-methylbenzyl)-6-tert-butyl-4-methylphenyl]terephtalate, 1,1-bis-(3,5-dimethyl-2-hydroxyphenyl)butane, 2,2-bis-(3,5-di-tert-butyl-4-hydroxyphenyl)propane, 2,2-bis-(5-tert-butyl-4-hydroxy2-methylphenyl)4-n-dodecylmercaptobutane, 1,1,5,5-tetra-(5-tert-butyl-4-hydroxy2-methylphenyl)pentane.

1.6. O-, N- and S-benzyl compounds, for example 3,5,3',5'-tetra-tert-butyl-4,4'-dihydroxydibenzyl ether, octadecyl-4-hydroxy-3,5-dimethylbenzylmercaptoacetate, tris-(3,5-di-tert-butyl-4-hydroxybenzyl)amine, bis(4-tert-butyl-3-hydroxy-2,6-dimethylbenzyl)dithioterephthalate, bis(3,5-di-tert-butyl-4-hydroxybenzyl)sulfide, isooctyl-3,5di-tert-butyl-4-hydroxybenzylmercaptoacetate.

1.7. Hydroxybenzylated malonates, for example dioctadecyl-2,2-bis-(3,5-di-tert-butyl-2-hydroxybenzyl)-malonate, di-octadecyl-2-(3-tert-butyl-4-hydroxy-5-methylbenzyl)-malonate, di-dodecylmercaptoethyl-2,2-bis-(3,5-di-tert-butylthydroxybenzyl)malonate, bis-[4-(1,1,3,3-tetramethylbutyl)phenyl]-2,2-bis(3,5-di-tert-butyl-4-hydroxybenzyl)malonate.

1.8. Aromatic hydroxybenzyl compounds, for example 1,3,5-tris-(3,5-di-tert-butyl-4-hydroxybenzyl)-2,4,6-trimethylbenzene, 1,4-bis(3,5-di-tert-butyl-4-hydroxybenzyl)-2,3,5,6-tetramethylbenzene, 2,4,6-tris(3,5-di-tert-butyl-4-hydroxybenzyl)phenol.

1.9. Triazine Compounds, for example 2,4-bis(octylmercapto)-6-(3,5-di-tert-butyl-4-hydroxyanilino)-1,3,5-triazine, 2-octylmercapto-4,6-bis(3,5-di-tert-butyl-4-hydroxyanilino)-1,3,5-triazine, 2-octylmercapto-4,6-bis(3,5-di-tert-butyl-4-hydroxyphenoxy)-1,3,5-triazine, 2,4,6-tris(3,5-di-tert-butyl-4-hydroxyphenoxy)-1,2,3-triazine, 1,3,5-tris-(3,5-di-tert-butyl-4-hydroxybenzyl)isocyanurate, 1,3,5-tris(4-tert-butyl-3-hydroxy-2,6-dimethylbenzyl)isocyanurate, 2,4,6-tris(3,5-di-tert-butyl-4-hydroxyphenylethyl)-1,3,5-tri-azine, 1,3,5-tris(3,5-di-tert-butyl-4-hydroxyphenylpropionyl)-hexahydro-1,3,5-triazine, 1,3,5-tris(3,5-dicyclohexyl-4-hydroxybenzyl)isocyanurate.

1.10. Benzylphosphonates, for example dimethyl-2,5-di-tert-butyl-4-hydroxybenzylphosphonate, diethyl-3,5-di-tert-butyl-4-hydroxybenzylphosphonate, dioctadecyl3,5-di-tert-butyl-4-hydroxybenzylphosphonate, dioctadecyl-5-tert-butyl-4-hydroxy3-methylbenzylphosphonate, the calcium salt of the monoethyl ester of 3,5-di-tert-butyl-4-hydroxybenzylphosphonic acid.

1.11. Acylaminophenols, for example 4-hydroxylauranilide, 4-hydroxystearanilide, octyl N-(3,5-di-tert-butyl-4-hydroxyphenyl)carbamate.

1.12. Esters of β-(3,5-di-tert-butyl-4-hydroxyphenyl)propionic acid with mono- or polyhydric alcohols, e.g. with methanol, ethanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl) isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane.

1.13. Esters of β-(5-tert-butyl-4-hydroxy-3-methylphenyl)propionic acid with mono- or polyhydric alcohols, e.g. with methanol, ethanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl) isocyanurate, N,N'-bis-(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane.

1.14 Esters of β-(3,5-dicyclohexyl-4-hydroxyphenyl)propionic acid with mono- or polyhydric alcohols, e.g. with methanol, ethanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl) isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane.

1.15 Esters of 3,5-di-tert-butyl-4-hydroxyphenyl acetic acid with mono- or polyhydric alcohols, e.g. with methanol, ethanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl) isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane.

1.16. Amides of β-(3,5-di-tert-butyl-4-hydroxyphenyl)propionic acid e.g. N,N'-bis(3,5-di-tert-butyl-4-hydroxyphenylpropionyl)hexamethylenediamine, N,N'-bis(3,5-di-tert-butyl-4-hydroxyphenylpropionyl)trimethylenediamine, N,N'-bis(3,5-di-tert-butyl-4-hydroxyphenylpropionyl)hydrazine.

### 2. UV absorbers and light stabilisers

2.1. 2-(2'-Hydroxyphenyl)benzotriazoles, for example 2-(2'-hydroxy-5'-methylphenyl)-benzotriazole, 2-(3',5'-di-tert-butyl-2'-hydroxyphenyl)benzotriazole, 2-(5'-tert-butyl-2'-hydroxyphenyl)benzotriazole, 2-(2'-hydroxy-5'-(1,1,3,3-tetramethylbutyl)phenyl)benzotriazole, 2-(3',5'-di-tert-butyl-2'-hydroxyphenyl)-5-chloro-benzotriazole, 2-(3'-tert-butyl-2'-hydroxy-5'-methylphenyl)-5-chloro-benzotriazole, 2-(3'-sec-butyl-5'-tert-butyl-2'-hydroxyphenyl)benzotriazole, 2-(2'-hydroxy-4'-octyloxyphenyl)benzotriazole, 2-(3',5'-di-tert-amyl-2'-hydroxyphenyl)benzotriazole, 2-(3',5'-bis-(α,α-dimethylbenzyl)-2'-hydroxyphenyl)benzotriazole, mixture of 2-(3'-tert-butyl-2'-hydroxy-5'-(2-octyloxycarbonylethyl)phenyl)-5-chloro-benzotriazole, 2-(3'-tert-butyl-5'-[2-(2-ethylhexyloxy)-carbonylethyl]-2'-hydroxyphenyl)-5-chloro-benzotriazole, 2-(3'-tert-butyl-2'-hydroxy-5'-(2-methoxycarbonylethyl)phenyl)-5-chloro-benzotriazole, 2-(3'-tert-butyl-2'-hydroxy-5'-(2-methoxycarbonylethyl)phenyl)benzotriazole, 2-(3'-tert-butyl-2'-hydroxy-5'-(2-octyloxycarbonylethyl)phenyl)benzotriazole, 2-(3'-tert-butyl-5'-[2-(2-ethylhexyloxy)carbonylethyl]-2'-hydroxyphenyl)benzotriazole, 2-(3'-dodecyl-2'-hydroxy-5'-methylphenyl)benzotriazole, and 2-(3'-tert-butyl-2'-hydroxy-5'-(2-isooctyloxycarbonylethyl)phenylbenzotriazole, 2,2'-methylene-bis[4-(1,1,3,3-tetramethylbutyl)6-benzotriazole-2-ylphenol]; the transesterification product of 2-[3'-tert-butyl-5'-(2-methoxycarbonylethyl)-2'-hydroxyphenyl]-2H-benzotriazole with polyethylene glycol 300; 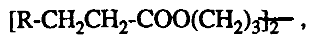 where R =3'-tert-butyl-4'-hydroxy-5'-2H-benzotriazol-2-ylphenyl.

2.2. 2-Hydroxybenzophenones, for example the 4-hydroxy, 4-methoxy, 4-octyloxy, 4-decyloxy, 4-dodecyloxy, 4-benzyloxy, 4,2',4'-trihydroxy and 2'-hydroxy-4,4'-dimethoxy derivatives.

2.3. Esters of substituted and unsubstituted benzoic acids, as for example 4-tertbutylphenyl salicylate, phenyl salicylate, octylphenyl salicylate, dibenzoyl resorcinol, bis(4-tert-butylbenzoyl) resorcinol, benzoyl resorcinol, 2,4-di-tertbutylphenyl 3,5-di-tert-butyl-4-hydroxybenzoate, hexadecyl 3,5-di-tert-butyl-4-hydroxybenzoate, octadecyl 3,5-di-tert-butyl-4-hydroxybenzoate, 2-methyl-4,6-di-tert-butylphenyl 3,5-di-tert-butyl-4-hydroxybenzoate.

2.4. Acrylates, for example ethyl α-cyano-β,β-diphenylacrylate, isooctyl α-cyano-β,β-diphenylacrylate, methyl α-carbomethoxycinnamate, methyl α-cyano-β-methyl-p-methoxycinnamate, butyl α-cyano-β-methyl-p-methoxy-cinnamate, methyl α-carbomethoxy-p-methoxycinnamate and N-(β-carbomethoxy-β-cyanovinyl)-2-methylindoline.

2.5. Nickel compounds, for example nickel complexes of 2,2'-thio-bis-[4-(1,1,3,3-tetra-methylbutyl)phenol], such as the 1:1 or 1:2 complex, with or without additional ligands such as n-butylamine, triethanolamine or N-cyclohexyldiethanolamine, nickel dibutyldithiocarbamate, nickel salts of the monoalkyl esters, e.g. the methyl or ethyl ester, of 4-hydroxy-3,5-di-tert-butylbenzylphosphonic acid, nickel complexes of ketoximes, e.g. of 2-hydroxy-4-methylphenyl undecylketoxime, nickel complexes of 1-phenyl-4-lauroyl-5-hydroxypyrazole, with or without additional ligands.

2.6. Sterically hindered amines, for example bis(2,2,6,6-tetramethyl-piperidyl)sebacate, bis(2,2,6,6-tetramethyl-piperidyl)succinate, bis(1,2,2,6,6-pentamethylpiperidyl)sebacate, bis(1,2,2,6,6-pentamethylpiperidyl) n-butyl-3,5-di-tert-butyl-4-hydroxybenzylmalonate, the condensate of 1-(2-hydroxyethyl)-2,2,6,6-tetramethyl-4-hydroxypiperidine and succinic acid, the condensate of N,N'-bis(2,2,6,6-tetramethyl-4-piperidyl)hexamethylenediamine and 4-tert-octylamino-2,6-dichloro-1,3,5-triazine, tris(2,2,6,6-tetramethyl-4-piperidyl) nitrilotriacetate, tetrakis(2,2,6,6-tetramethyl-4- piperidyl)-1,2,3 ,4-butane-tetracarboxylate, 1,1'-(1,2-ethanediyl)bis(3,3,5,5-tetramethylpiperazinone), 4-benzoyl-2,2,6,6-tetramethylpiperidine, 4-stearyloxy-2,2,6,6-tetramethylpiperidine, bis(1,2,2,6,6-pentamethylpiperidyl)-2-n-butyl-2-(2-hydroxy-3,5-di-tert-butylbenzyl)malonate, 3-n-octyl-7,7,9,9-tetramethyl-1,3,8-triazasprio[4.5]decan-2,4-dion, bis(1-octyloxy-2,2,6,6-tetramethylpiperidyl)sebacate, bis(1-octyloxy-2,2,6,6-tetramethylpiperidyl)succinate, the condensate of N,N'-bis-(2,2,6,6-tetramethyl4-piperidyl)hexamethylenediamine and 4-morpholino-2,6-dichloro-1,3,5-triazine, the condensate of 2-chloro-4,6-bis(4-n-butyl-amino-2,2,6,6-tetramethylpiperidyl )-1,3,5-triazine and 1,2-bis(3-aminopropylamino)-ethane, the condensate of 2-chloro-4,6-di-(4-n-butylamino-1,2,2,6,6-pentamethylpiperidyl)-1,3,5-triazine and 1,2-bis-(3-aminopropylamino)ethane, 8-acetyl-3-dodecyl-7,7,9,9-tetramethyl-1,3,8-triazaspiro[4.5]decane-2,4-dione, 3-dodecyl-1-(2,2,6,6-tetramethyl-4-piperidyl)pyrrolidin-2,5-dione, 3-dodecyl-1-(1,2,2,6,6-pentamethyl-4-piperidyl)pyrrolidine-2,5-dione.

2.7. Oxamides, for example 4,4'-dioctyloxyoxanilide, 2,2'-dioctyloxy-5,5'-di-tert-butoxanilide, 2,2'-didodecyloxy-5,5'-di-tert-butoxanilide, 2-ethoxy-2'-ethoxanilide, N,N'-bis(3-dimethylaminopropyl)oxamide, 2-ethoxy-5-tert-butyl-2'-ethoxanilide and its mixture with 2-ethoxy-2'-ethyl-5,4'-di-tert-butoxanilide and mixtures of ortho- and paramethoxy-disubstituted oxanilides and mixtures of o- and p-ethoxy-disubstituted oxanilides.

2.8. 2-(2-Hydroxyphenyl)-1,3,5-triazines, for example 2,4,6-tris(2-hydroxy-4-octyloxyphenyl)-1,3,5-triazine, 2-(2-hydroxy-4-octyloxyphenyl)-4,6-bis(2,4-dimethylphenyl)-1,3,5-triazine, 2-(2,4-dihydroxyphenyl)-4,6-bis(2,4-dimethylphenyl)-1,3,5-triazine, 2,4-bis(2-hydroxy-4-propyloxyphenyl)6-(2,4-dimethylphenyl)-1,3,5-triazine, 2-(2-hydroxy-4-octyloxyphenyl)-4,6-bis(4-methylphenyl)-1,3,5-triazine, 2-(2-hydroxy-4-dodecyloxyphenyl)-4,6-bis(2,4-dimethylphenyl)-1,3,5-triazine, 2-[2-hydroxy-4-(2hydroxy-3-butyloxy-propoxy)phenyl]-4,6-bis(2,4-dimethyl)-1,3,5-triazine, 2-[2-hydroxy-4-(2-hydroxy-3-octyloxy-propyloxy)phenyl]4,6-bis(2,4-dimethyl)-1,3,5-triazine.

3. Metal deactivators, for example N,N'-diphenyloxamide, N-salicylal-N'-salicyloyl hydrazine, N,N'-bis(salicyloyl) hydrazine, N,N'-bis(3,5-di-tert-butyl-4-hydroxyphenylpropionyl)hydrazine, 3-salicyloylamino-1,2,4-triazole, bis(benzylidene)oxalyl dihydrazide, oxanilide, isophthaloyl dihydrazide, sebacoyl bisphenylhydrazide, N,N'-diacetyladipoyl dihydrazide, N,N'-bis(salicyloyl)oxalyl dihydrazide, N,N'-bis(salicyloyl)-thiopropionyl dihydrazide.

4. Phosphites and phosphonites, for example triphenyl phosphite, diphenyl alkyl phosphites, phenyl dialkyl phosphites, tris(nonylphenyl) phosphite, trilauryl phosphite, trioctadecyl phosphite, distearyl pentaerythritol diphosphite, tris(2,4-di-tert-butylphenyl) phosphite, diisodecyl pentaerythritol diphosphite, bis(2,4-di-tert-butylphenyl) pentaerythritol diphosphite, bis(2,6-di-tert-butyl-4-methylphenyl)-pentaeryt hritol diphosphite, diisodecyloxypentaerythritol diphosphite, bis(2,4-di-tert-butyl-6-methylphenyl)pentaerythritol diphosphite, bis(2,4,6-tris(tert-butylphenyl)pentaerythritol diphsophite, tristearyl sorbitol triphosphite, tetrakis(2,4-di-tert-butylphenyl) 4,4'-biphenylene diphosphonite, 6-isooctyloxy-2,4,8,10-tetra-tert-butyl-12H-dibenz[d,g]-1,3,2-dioxaphosphocin, 6-fluoro-2,4,8,10-tetra-tert-butyl-12-methyl-dibenz[d,g]-1,3,2-dioxaphosphocin, bis(2,4-di-tert-butyl-6-methylphenyl)methylphosphite, bis(2,4-di-tert-butyl-6-methylphenyl)ethylphosphite.

5. Peroxide scavengers, for example esters of β-thiodipropionic acid, for example the lauryl, stearyl, myristyl or tridecyl esters, mercaptobenzimidazole or the zinc salt of 2-mercaptobenzimidazole, zinc dibutyldithiocarbamate, dioctadecyl disulfide, pentaerythritol tetrakis(β-dodecylmercapto)propionate.

6. Polyamide stabilisers, for example, copper salts in combination with iodides and/or phosphorus compounds and salts of divalent manganese.

7. Basic co-stabilisers, for example, melamine, polyvinylpyrrolidone, dicyandiamide, triallyl cyanurate, urea derivatives, hydrazine derivatives, amines, polyamides, polyurethanes, alkali metal salts and alkaline earth metal salts of higher fatty acids for example calcium stearate, zinc stearate, magnesium behenate, magnesium stearate, sodium ricinoleate and potassium palmitate, antimony pyrocatecholate or tin pyrocatecholate.

8. Nucleating agents, for example, 4-tert-butylbenzoic acid, adipic acid, diphenylacetic acid.

9. Fillers and reinforcing agents, for example, calcium carbonate, silicates, glass fibres, asbestos, talc, kaolin, mica, barium sulfate, metal oxides and hydroxides, carbon black, graphite.

10. Other additives, for example, plasticisers, lubricants, emulsifiers, pigments, optical brighteners, flameproofing agents, antistatic agents and blowing agents.

11. Benzofuranones and indolinones, for example those disclosed in US-A-4 325 863, US-A-4 338 244 or US-A-5 175 312, or 3-[4-(2-acetoxyethoxy)phenyl]-5,7-di-tert-butylbenzofuran-2-one, 5,7-di-tert-butyl-3-[4-(2-stearoyloxyethoxy)phenyl]benzofuran-2-one, 3,3'-bis[5,7-di-tert-butyl-3-(4-[2-hydroxyethoxy]phenyl)benzofuran-2-one], 5,7-di-tert-butyl-3-(4-ethoxyphenyl)benzofuran-2-one, 3-(4-acetoxy-3,5-dimethylphenyl)-5,7-di-tert-butyl-benzofuran-2-one, 3-(3,5-dimethyl-4-pivaloyloxyphenyl)-5,7-di-tert-butyl-benzofuran-2-one.

The co-stabilizers, with the exception of the benzofuranones listed under 11, are added for example in concentrations of 0.01 to 10%, relative to the total weight of the material to be stabilized.

Further preferred compositions comprise, in addition to components (a) and (b) further additives, in particular phenolic antioxidants, light stabilizers or processing stabilizers.

Particularly preferred additives are phenolic antioxidants (item 1 of the list), sterically hindered amines (item 2.6 of the list), phosphites and phosphonites (item 4 of the list) and peroxide-destroying compounds (item 5.) of the list.

Additional additives (stabilizers) which are also particularly preferred are benzofuran-2-ones, such as described, for example, in US-A-4 325 863, US-A-4 338 244 or US-A-5 175 312.

Examples of such benzofuran-2-ones are compounds of the formula 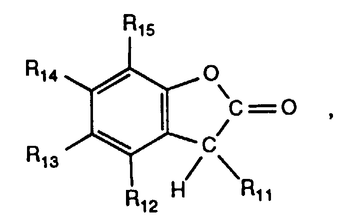 in which
R₁₁ is phenyl or phenyl which is substituted by 1 to 3 alkyl radicals together having at most 18 carbon atoms, alkoxy having 1 to 12 carbon atoms, alkoxycarbonyl having 2 to 18 carbon atoms or chlorine;
R₁₂ is hydrogen;
R₁₄ is hydrogen alkyl having 1 to 12 carbon atoms, cyclopentyl, cyclohexyl or chlorine;
R₁₃ has the meaning of R₁₂ or R₁₄ or is a radical of the formula 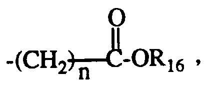 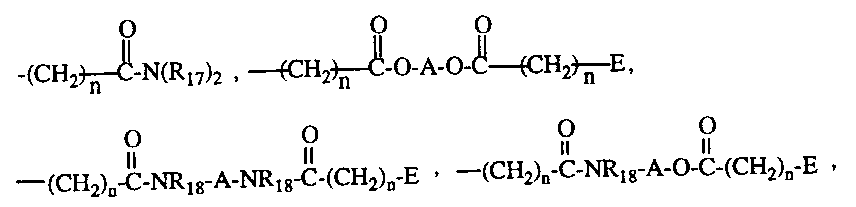 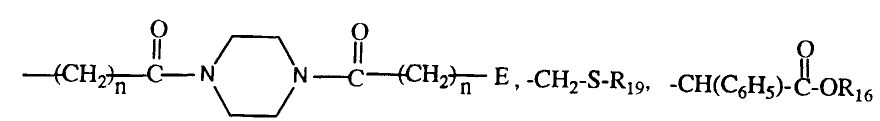 or -D-E,
in which
R₁₆ is hydrogen, alkyl having 1 to 18 carbon atoms, alkyl having 2 to 18 carbon atoms which is interrupted by oxygen or sulfur, dialkylaminoalkyl having a total of 3 to 16 carbon atoms, cyclopentyl, cyclohexyl, phenyl or phenyl which is substituted by 1 to 3 alkyl radicals together having at most 18 carbon atoms;
n is 0, 1 or 2;
the substituents R₁₇, independently of one another, are hydrogen, alkyl having 1 to 18 carbon atoms, cyclopentyl, cyclohexyl, phenyl, phenyl which is substituted by 1 or 2 alkyl radicals together having at most 16 carbon atoms, a radical of the formula -C₂H₄OH, -C₂H₄-O-CₘH₂ₘ₊₁ or 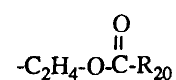 or together with the nitrogen atom to which they are attached form a piperidine or morpholine radical;
m is 1 to 18;
R₂₀ is hydrogen, alkyl having 1 to 22 carbon atoms or cycloalkyl having 5 to 12 carbon atoms;
A is alkylene having 2 to 22 carbon atoms which may be interrupted by nitrogen, oxygen or sulfur;
R₁₈ is hydrogen, alkyl having 1 to 18 carbon atoms, cyclopentyl, cyclohexyl, phenyl, phenyl which is substituted by 1 or 2 alkyl radicals together having at most 16 carbon atoms, or is benzyl;
R₁₉ is alkyl having 1 to 18 carbon atoms;
D is -O-, -S-, -SO-, -SO₂- or -C(R₂₁)₂- ;
the substituents R₂₁, independently of one another, are hydrogen, C₁-C₁₆alkyl, the two R₂₁ together containing 1 to 16 carbon atoms, R₂₁ is furthermore phenyl or a radical of the formula 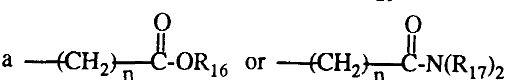 in which n, R₁₆ and R₁₇ are as defined above;
E is a radical of the formula 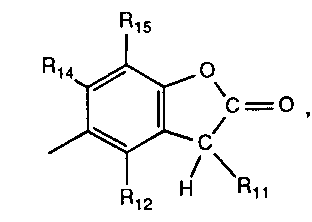 in which R₁₁, R₁₂ and R₁₄ are as defined above; and
R₁₅ is hydrogen, alkyl having 1 to 20 carbon atoms, cyclopentyl, cyclohexyl, chlorine or a radical of the formula 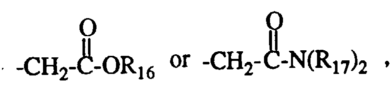 in which R₁₆ and R₁₇ are as defined above, or R₁₅ together with R₁₄ forms a tetramethylene radical.

Preference is given to those benzofuran-2-ones in which R₁₃ is hydrogen, alkyl having 1 to 12 carbon atoms, cyclopentyl, cyclohexyl, chlorine or a radical of the formula 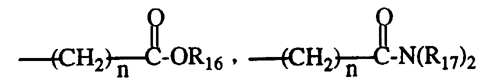 or -D-E, in which n, R₁₆, R₁₇, D and E are as defined above, R₁₆ is in particular hydrogen, alkyl having 1 to 18 carbon atoms, cyclopentyl or cyclohexyl.

Preference is given furthermore to those benzofuran-2-ones in which R₁₁ is phenyl or phenyl which is substituted by 1 or 2 alkyl radicals together having at most 12 carbon atoms; R₁₂ is hydrogen; R₁₄ is hydrogen or alkyl having 1 to 12 carbon atoms; R₁₃ is hydrogen, alkyl having 1 to 12 carbon atoms, 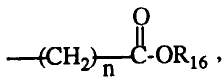 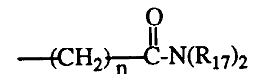 or -D-E; R₁₅ is hydrogen, alkyl having 1 to 20 carbon atoms, 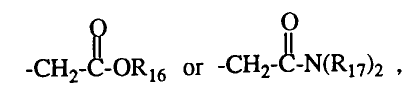 or R₁₅ together with R₁₄ forms a tetramethylene radical, n, R₁₆, R₁₇, D and E being as defined at the beginning.

Of particular interest are also those benzofuran-2-ones in which R₁₁ is phenyl; R₁₃ is hydrogen, alkyl having 1 to 12 carbon atoms or -D-E; R₁₂ and R₁₄, independently of one another, are hydrogen or alkyl having 1 to 4 carbon atoms; and R₁₅ is alkyl having 1 to 20 carbon atoms, D and E being as defined at the beginning.

Of special interest are finally also those benzofuran-2-ones in which R₁₁ is phenyl; R₁₃ is alkyl having 1 to 4 carbon atoms or -D-E; R₁₂ and R₁₄ are hydrogen; and R₁₅ is alkyl having 1 to 4 carbon atoms, cyclopentyl or cyclohexyl, D being a group -C(R₂₁)₂- and E being a radical of the formula 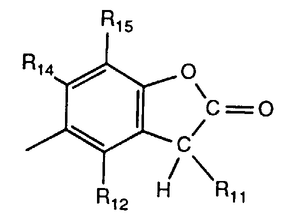 the substituents R₂₁ being identical to or different from one another and each being alkyl having 1 to 4 carbon atoms, and R₁₁, R₁₂, R₁₄ and R₁₅ being as defined.

The amount of additional additives, in particular stabilizers, for example of the benzofuran-2-ones mentioned, can vary within wide limits. For example, 0.0005 to 10, preferably 0.001 to 5, in particular 0.01 to 2, % by weight thereof can be present in the compositions according to the invention.

Incorporation of the amorphous solid form of 2,2',2"-nitrilo[triethyl-tris-(3,3',5,5'-tetra-tert-butyl-1,1'-biphenyl-2,2'-diyl) phosphite] and, if desired, further additives in the polymer organic material is carried out by known methods, for example before or during moulding or by applying the dissolved or dispersed compounds to the polymer organic material, if appropriate with subsequent slow evaporation of the solvent. The amorphous solid modification according to the invention can also be added to the materials to be stabilized in the form of a masterbatch containing them, for example, in a concentration of 2.5 to 25% by weight.

The amorphous solid modification according to the invention can also be added before or during polymerization or before crosslinking.

The amorphous solid modification according to the invention can be incorporated in the material to be stabilized in pure form or encapsulated in waxes, oils or polymers.

The amorphous solid modification according to the invention can also be sprayed onto the polymer to be stabilized. They are capable of diluting other additives (for example the abovementioned customary additives) or their melts, thus enabling them to be sprayed onto the polymer to be stabilized also together with these additives. Addition by spraying during deactivation of the polymerization catalysts is particularly advantageous, it being possible, for example, for the steam used for deactivation to be used for spraying.

In the case of bead polymerized polyolefins, it may be advantageous, for example, to apply the amorphous solid modification according to the invention, if desired together with other additives, by spraying.

The materials thus stabilized can be used in a wide range of forms, for example as films, fibres, tapes, moulding compositions, profiles or as binders for paints, adhesives or cements.

As already mentioned, the organic materials to be protected are preferably organic, in particular synthetic, polymers. Of these, the materials being protected are particularly advantageously thermoplastic materials, in particular polyolefins. The excellent efficiency of the amorphous solid form of 2,2',2"-nitrilo[triethyl-tris-(3,3',5,5'-tetra-tert-butyl-1,1'-biphenyl-2,2'-diyl) phosphite] as processing stabilizer (thermal stabilizer) should be mentioned in particular. To this end, it is advantageously added to the polymer before or during its processing. It is however also possible to stabilize other polymers (for example elastomers) or lubricants or hydraulic fluids against degradation, for example light-induced or thermal-oxidative degradation. For elastomers, see the above list of possible organic materials.

Suitable lubricants and hydraulic fluids are based, for example, on mineral or synthetic oils or mixtures thereof. Lubricants are known to one skilled in the art and described in the relevant technical literature, for example in Dieter Klamann, "Schmierstoffe und verwandte Produkte" (Verlag Chemie, Weinheim 1982), in Schewe-Kobek, "Das Schmiermittel-Taschenbuch" (Dr. Alfred Hüthig-Verlag, Heidelberg, 1974) and in "Ullmanns Enzyklopädie der technischen Chemie" vol. 13, pages 85-94 (Verlag Chemie, Weinheim, 1977).

Accordingly, a preferred embodiment of the present invention is the use of the amorphous solid form of 2,2',2"-nitrilo[triethyl-tris-(3,3, 5,5',-tetra-tert-butyl-1,1'-biphenyl-2,2'-diyl) phosphite] for stabilizing organic materials against oxidative, thermal or light-induced degradation.

The amorphous solid modification according to the invention is preferably used as processing stabilizer (thermal stabilizer) of thermoplastic polymers.

The present invention also provides a process for stabilizing an organic material against oxidative, thermal or light-induced degradation, which comprises incorporating therein or applying thereto the amorphous solid form of 2,2',2"-nitrilo[triethyl-tris-(3,3',5,5'-tetra-tert-butyl-1,1'-biphenyl-2,2'-diyl) phosphite].

The instant amorphous form of 2,2',2"-nitrilo[triethyl-tris-(3,3',5,5'-tetra-tert-butyl-1,1'-biphenyl-2,2'-diyl) phosphite] shows a faster rate of dissolving and better solubility in organic materials, such as in polymers and in lubricants, as compared to the prior art crystalline form. This provides better compatibility and more uniform distribution of the instant amorphous form of 2,2',2"-nitrilo[triethyl-tris-(3,3',5,5'-tetra-tert-butyl-1,1'-biphenyl2,2'-diyl) phosphite] with an organic polymer during formulation compared to the prior art compound melting at 121-134°C.

Differential scanning calorimetry (DSC) measurements are obtained on a TA Instrument Inc., 910 differential scanning calorimeter, with a 100 ml/min nitrogen purge, aligned aluminum pan, temperature scan at 5°C/min to 230°C.

X-ray diffraction patterns are recorded on a Philips Norelco X-ray Diffractometer unit, using Cu-Kα radiation with a nickel filter.

The examples which follow further illustrate the invention. The parts or percentages given are by weight.

### Exampe 1:

The compound of formula I, 2,2',2"-nitrilo[triethyl-tris-(3,3',5,5'-tetra-tert-butyl-1,1'-biphenyl-2,2'-diyl) phosphite], is prepared according to procedure of Example 4 of U.S. Patent No. 4,318,845. The compound of formula I is heated at 210°C until a clear melt is obtained. The melt is cooled rapidly to ambient temperature to yield a glassy solid with a T_{g}(DSC) of 105°-110°C. The white solid is conveniently ground into a white powder using a mortar and pestle. The X-ray diffraction pattern obtained using Cu-Kα is featureless. Analysis: Calcd for C₉₀H₁₃₂NO₉P₃; C, 73.8; H, 9.1; N, 0.96 %. Found: C, 73.4; H, 9.3; N, 0.9 %.

### Example 2: Bulk Density

This example illustrates the superior packaging properties of the novel amorphous solid modification of the compound of formula I as prepared in Example 1 as compared to the powder form of the compound of Example 4 of U.S. Patent No. 4,318,845.

The apparent bulk density of the solids is measured according to the method of ASTM D-1895 (79). A higher apparent bulk density allows for a greater mass per unit volume which affords advantages in packaging of the solid product, such as lower costs for the packaging material, less storage space is required, etc. The results are listed in Table 1.

**Table 1:**

| Compound | Bulk Density (g/ml) |
|---|---|
| Example 1 | 0.49 |
| (amorphous solid form) | |
| | |
| Example 4 of US-A-4 318 845 | 0.44 |
| (m.p. 121-134°C) | |

### Example 3: Process Stabilization of Polypropylene at 274°C.

The base formulation comprises unstabilized, high yield/high selectivity catalyzed polypropylene (PROFAX® 6501, Batch No. BD07155, produced by Himont) containing 0.075% by weight of calcium stearate. The test additives are incorporated into the polypropylene by dry blending or, when the additive is a liquid, using a minimum amount of methylene chloride solvent The solvent is then removed by evaporation under reduced pressure. The stabilized resin formulation is extruded at 90 rpm from a 2.54 cm diameter extruder at 274°C with a residence time of 90 seconds. After each of the first, third and fifth extrusions, the melt flow rate (in grams/10 minutes) is determined by ASTM method D1238 on the pellets obtained from the extruder. The melt flow rate is a measure of the molecular weight of the polymer and indicates whether thermal degradation is occurring during melt processing by extrusion. A minimum change in melt flow rate is favored and indicates good melt processing stabilization. A substantial increase in the melt flow denotes pronounced chain degradation, i.e. poor stabilization.The results are given in Table 2 below.

**Table 2:**

| Additive | Concentration (% by weight) | Melt Flow after Extrusion | | |
|---|---|---|---|---|
| | | 1st | 3rd | 5th |
| Calcium stearate | 0.075 | 13.5 | 24.0 | 45.2 |
| Calcium stearate plus | 0.075 | 8.1 | 12.9 | 17.5 |
| AO A | 0.075 | | | |
| Calcium stearate plus | 0.075 | 5.8 | 6.0 | 7.5 |
| AO A plus | 0.075 | | | |
| Compound of Example 1 | 0.075 | | | |
| AO A is neopentanetetrayl tetrakis(3,5-di-tert-butyl-4-hydroxyhydrocinnamate). | | | | |

Example 4: Solubility of amorphous solid form (Example 1, Compound A) and crystalline compound of formula I (Example 4 of US-A-4 318 845, m.p. 121-134°C, Compound B in Mobil BB® oil. Both compounds have the same uniform particle sizes (40-70 micron).
a) Into a vial of 980 mg of Mobil BB® oil was added 20 mg of compound A at ambient temperature. For the first 30 minutes, the vial was shaken every 10 minutes. After the initial 30 minutes, the vial was left standing. All of compound A dissolved into the oil after 2.5 hours to give a clear solution.
b) Into a vial of 980 mg of Mobil BB® oil was added 20 mg of compound B at ambient temperature. For the first 30 minutes, the vial was shaken every 10 minutes. After the initial 30 minutes, the vial was left standing. After 2.5 hours, compound B gave a cloudy suspension. A clear solution was obtained after 16 hours.
c) Into a vial of 980 mg of Mobil BB® oil was added 20 mg of compound A at ambient temperature. The vial was then placed into a 60°C oil bath. After 10 minutes, all of compound A dissolved into the oil to give a clear solution.
d) Into a vial of 980 mg of Mobil BB® oil was added 20 mg of compound B at ambient temperature. The vial was then placed into a 60°C oil bath. After 10 minutes, compound B gave a cloudy suspension. A clear solution was obtained after 16 hours.
e) Into a vial of 980 mg of Mobil BB® oil was added 10 mg of compound A at ambient temperature. For the first 30 minutes, the vial was shaken every 10 minutes. After the initial 30 minutes, the vial was left standing. All of compound A dissolved into the oil after 1.5 hours to give a clear solution.
f) Into a vial of 980 mg of Mobil BB® oil was added 10 mg of compound B at ambient temperature. For the first 30 minutes, the vial was shaken every 10 minutes. After the initial 30 minutes, the vial was left standing. After 1.5 hours, the mixture was a cloudy suspension. A clear solution was obtained after 16 hours.

A faster rate of dissolving a stabilizer in an oil results in a better compatibility and more uniform distribution of the stabilizer in an organic polymer during formulation. The results are summarized in Table 3.

**Table 3:**

| Experiment | Test Compound (% by weight) | Temp. (°C) | Observation | Time |
|---|---|---|---|---|
| 4a | 2 % A | RT | Clear solution | 2.5 hours |
| 4b | 2 % B | RT | Cloudy suspension | 2.5 hours^{b)} |
| 4c | 2 % A | 60^{a)} | Clear solution | 10 minutes |
| 4d | 2 % B | 60^{a)} | Cloudy suspension | 10 minutes^{c)} |
| 4e | 1 % A | RT | Clear solution | 1.5 hours |
| 4f | 1 % B | RT | Cloudy suspension | 1.5 hours^{b)} |

| | | | | |
|---|---|---|---|---|
| a) The temperature reading is the oil temperature. | | | | |
| b) Clear solutions were obtained after 16 hours. | | | | |
| c) Clear solution was obtained after 5 hours at 60°C. d) RT = room temperature. | | | | |

## Claims

1. The amorphous solid form of 2,2',2"-nitrilo[triethyl-tris-(3,3',5,5'-tetra-tert-butyl-1,1'-biphenyl-2,2'-diyl) phosphite], characterized by melting in the range of 105-110°C and by an X-ray diffraction pattern which is featureless.

2. A process for the preparation of the amorphous solid form of the compound 2,2',2"-nitrilo[triethyl-tris-(3,3',5,5'-tetra-tert-butyl-1,1'-biphenyl-2,2'-diyl) phosphite] which comprises melting said compound and rapidly cooling the melt.

3. A process according to claim 2 which comprises pouring the molten material onto a cool surface maintained below 100°C.

4. A process according to claim 3 wherein the cool surface is near 25°C.

5. The amorphous solid form of 2,2',2"-nitrilo[triethyl-tris-(3,3',5,5'-tetra-tert-butyl-1,1'-biphenyl-2,2'-diyl) phosphite] obtainable by the process of claim 2.

6. A composition comprising
a) an organic material subjected to oxidative, thermal or light-induced degradation, and
b) the amorphous solid form of 2,2',2"-nitrilo[triethyl-tris-(3,3',5,5'-tetra-tert-butyl-1,1'-biphenyl-2,2'-diyl) phosphite] as defined in claim 1 and 5.

7. A composition according to claim 6, additionally comprising, apart from components (a) and (b), further additives.

8. A composition according to claim 7, comprising, as further additives, phenolic antioxidants, light stabilizers or processing stabilizers.

9. A composition according to claim 7, comprising, as the further additive, at least one compound of benzofuran-2-one type.

10. A composition according to claim 6, comprising, as component (a), natural, semi-synthetic or synthetic polymers.

11. A composition according to claim 6, comprising, as component (a), thermoplastic polymers.

12. A composition according to claim 6, comprising, as component (a), a polyolefin.

13. A composition according to claim 6, comprising, as component (a), polyethylene or polypropylene.

14. Use of the amorphous solid form of 2,2',2"-nitrilo[triethyl-tris-(3,3',5,5'-tetra-tert-butyl-1,1'-biphenyl-2,2'-diyl) phosphite], as defined in claim 1 and 5, as stabilizer for organic materials against oxidative, thermal or light-induced degradation.

15. Use according to claim 14, in which the amorphous solid form of 2,2',2"-nitrilo[triethyl-tris-(3,3',5,5'-tetra-tert-butyl-1,1'-biphenyl-2,2'-diyl) phosphite], as defined in claim 1 and 5, is used as processing stabilizer (thermal stabilizer) in thermoplastic polymers.

16. A process for stabilizing an organic material against oxidative, thermal or light-induced degradation, which comprises incorporating therein or applying thereto the amorphous solid form of 2,2',2"-nitrilo[triethyl-tris-(3,3',5,5'-tetra-tert-butyl-1,1'-biphenyl-2,2'-diyl) phosphite] as defined in claim 1 and 5.

## Patentansprüche

1. Amorphe feste Form von 2,2',2''-Nitrilo[triethyltris-(3,3',5,5'-tetra-tert-butyl-1,1'-biphenyl-2,2'-diyl) -phosphit], gekennzeichnet durch Schmelzen im Bereich 105 - 110°C und durch ein merkmalsloses Röntgenstrahlbeugungsmuster.

2. Verfahren zur Herstellung der amorphen festen Form der Verbindung 2,2',2'-Nitrilo[triethyl-tris-(3,3',5,5'-tetra-tert-butyl-1,1'-biphenyl-2,2'-diyl) phosphit], das Schmelzen der Verbindung und rasches Abkühlen der Schmelze umfaßt.

3. Verfahren nach Anspruch 2, umfassend Gießen des geschmolzenen Materials auf eine kühle Fläche, die unter 100°C gehalten wird.

4. Verfahren nach Anspruch 3, worin die kühle Oberfläche nahe 25°C ist.

5. Amorphe feste Form von 2,2',2''-Nitrilo[triethyltris-(3,3',5,5'-tetra-tert-butyl-1,1'-biphenyl-2,2'-diyl) -phosphit], erhältlich durch das Verfahren von Anspruch 2.

6. Zusammensetzung, umfassend
a) ein organisches Material, das oxidativem, thermischem oder durch Licht induziertem Abbau unterliegt, und
b) die amorphe feste Form von 2,2',2''-Nitrilo[triethyl-tris-(3,3',5,5'-tetra-tert-butyl-1,1'-biphenyl-2,2'-diyl)phosphit], wie in Anspruch 1 und 5 definiert.

7. Zusammensetzung nach Anspruch 6, die zusätzlich neben den Komponenten (a) und (b) weitere Additive umfaßt.

8. Zusammensetzung nach Anspruch 7, umfassend als weitere Additive phenolische Antioxidantien, Lichtstabilisatoren oder Verfahrensstabilisatoren.

9. Zusammensetzung nach Anspruch 7, umfassend als weiteres Additiv mindestens eine Verbindung vom Benzofuran-2-on-Typ.

10. Zusammensetzung nach Anspruch 6, umfassend als Komponente (a) natürliche, halbsynthetische oder synthetische Polymere.

11. Zusammensetzung nach Anspruch 6, umfassend als Komponente (a) thermoplastische Polymere.

12. Zusammensetzung nach Anspruch 6, umfassend als Komponente (a) ein Polyolefin.

13. Zusammensetzung nach Anspruch 6, umfassend als Komponente (a) Polyethylen oder Polypropylen.

14. Verwendung der amorphen festen Form von 2,2',2''-Nitrilo[triethyl-tris-(3,3',5,5'-tetra-tert-butyl-1,1'-biphenyl-2,2'-diyl)phosphit], wie in Anspruch 1 und 5 definiert, als Stabilisator für organische Materialien gegen oxidativen, thermischen oder durch Licht induzierten Abbau.

15. Verwendung nach Anspruch 14, wobei die amorphe feste Form von 2,2',2'-Nitrilo[triethyl-tris-(3,3',5,5'-tetra-tert-butyl-1,1'-biphenyl-2,2'-diyl)phosphit], wie in Anspruch 1 und 5 definiert, als Verarbeitungsstabilisator (thermischer Stabilisator) in thermoplastischen Polymeren verwendet wird.

16. Verfahren zur Stabilisierung eines organischen Materials gegen oxidativen, thermischen oder durch Licht induzierten Abbau, umfassend Einarbeiten oder Auftragen der amorphen festen Form von 2,2",2"-Nitrilo[triethyl-tris-(3,3',5,5'-tetra-tert-butyl-1,1'-biphenyl-2,2'-diyl)phosphit], wie in Anspruch 1 und 5 definiert.

## Revendications

1. Forme solide amorphe du 2,2',2"-nitrilo[phosphite de triéthyle et de tris(3,3',5,5'-tétra-tert-butyl-1,1'-biphényle-2,2'-diyle)], caractérisée par une fusion dans l'intervalle de 105 à 110°C et par une image de diffraction aux rayons X non caractéristique.

2. Procédé pour préparer le forme solide amorphe du composé 2,2',2"-nitrilo[phosphite de triéthyle et de tris(3,3',5,5'-tétra-tert-butyl-1,1'-biphényle-2,2'-diyle)], qui consiste à faire fondre ledit composé et à refroidir rapidement la masse fondue.

3. Procédé selon la revendication 2, qui consiste à verser la matière fondue sur une surface froide maintenue en dessous de 100°C.

4. Procédé selon la revendication 3, dans lequel la surface froide est proche de 25°C.

5. Forme solide amorphe du 2,2',2"-nitrilo[phosphite de triéthyle et de tris(3,3',5,5'-tétra-tert-butyl-1,1'-biphényle-2,2'-diyle)], que l'on peut obtenir par le procédé selon la revendication 2.

6. Composition comprenant :
a) un matériau organique soumis à une dégradation par oxydation, thermique ou provoquée par la lumière, et
b) une forme solide amorphe du 2,2',2"-nitrilo-[phosphite de triéthyle et de tris(3,3',5,5'-tétra-tert-butyl-1,1'-biphényle-2,2'-diyle)] telle que définie dans les revendications 1 et 5.

7. Composition selon la revendication 6, qui, outre les constituants (a) et (b), contient en outre d'autres additifs.

8. Composition selon la revendication 7, qui comprend en tant qu'autres additifs des antioxydants phénoliques, des photostabilisants ou des stabilisants de mise en oeuvre.

9. Composition selon la revendication 7, comprenant, en tant qu'autre additif, au moins un composé du type benzofuranne-2-one.

10. Composition selon la revendication 6, comprenant comme constituant (a) des polymères naturels, semi-synthétiques ou synthétiques.

11. Composition selon la revendication 6, comprenant comme constituant (a) des polymères thermoplastiques.

12. Composition selon la revendication 6, comprenant comme constituant (a) une polyoléfine.

13. Composition selon la revendication 6, comprenant comme constituant (a) du polyéthylène ou du polypropylène.

14. Utilisation de la forme solide amorphe du 2,2',2"-nitrilo[phosphite de triéthyle et de tris(3,3', 5,5'-tétra-tert-butyl-1,1'-biphényle-2,2'-diyle)] selon les revendications 1 et 5 comme stabilisant pour matériaux organiques contre une dégradation par oxydation, thermique ou provoquée par la lumière.

15. Utilisation selon la revendication 14, dans laquelle la forme solide amorphe du 2,2',2"-nitrilo-[phosphite de triéthyle et de tris(3,3',5,5'-tétra-tert-butyl-1,1'-biphényle-2,2'-diyle)] selon les revendications 1 et 5 est utilisée comme stabilisant de mise en oeuvre (stabilisant thermique) dans les polymères thermoplastiques.

16. Procédé pour stabiliser un matériau organique contre une dégradation par oxydation, thermique ou provoquée par la lumière, qui consiste à y incorporer ou à lui appliquer la forme solide amorphe du 2,2',2"-nitrilo[phosphite de triéthyle et de tris(3,3',5,5'-tétra-tert-butyl-1,1'-biphényle-2,2'-diyle)], telle que définie dans les revendications 1 et 5.
